# EUROPEAN PATENT SPECIFICATION

(11) **EP 0 747 797 B1**
(45) Date of publication and mention of the grant of the patent: **09.08.2000**
(21) Application number: 95909104.2
(22) Date of filing: 17.02.1995
(51) Int. Cl.: G05D 19/02, G05B 19/19

(54) **DEVICE FOR SUPPRESSING VIBRATION OF A WORKING MACHINE**
VORRICHTUNG ZUR UNTERDRÜCKUNG VON SCHWINGUNGEN IN EINER ARBEITSMASCHINE
DISPOSITIF DE SUPPRESSION DES VIBRATIONS D'UN ENGIN DE TRAVAUX PUBLICS

(30) Priority: 21.02.1994 JP 4633094
(43) Date of publication of application: 11.12.1996
(73) Proprietor: KOMATSU LTD., Minato-ku, Tokyo 107-8414 (JP)
(72) Inventor: MIZUI, Seiichi, Hiratsuka-shi, Kanagawa 254 (JP)
(74) Representative: Meissner, Peter E., Dipl.-Ing.
(86) International application number: PCT/JP95/00223
(87) International publication number: WO 95/22789

(56) References cited:
- EP-A- 0 301 096
- WO-A-93/14321
- WO-A-93/18445
- JP-A- 63 012 594
- US-A- 4 297 888
- US-A- 4 843 293
- US-A- 4 878 557

## Description

### Technical Field

The present invention relates to a device for suppressing vibration of a working machine and particularly to a device for suppressing vibration of a working machine which is suitable for excavators such as a hydraulic shovel and so on, a lifting machine such as a crane and so on, and industrial equipment and so on which have working machines driven by oil pressure.

### Background Art

Generally, working machines driven by an oil hydraulic actuator generate vibration when the machines are operated in such a way as they are accelerated abruptly and so on, and the residual vibration immediately after an operation is completed especially has a bad influence upon the operability, ride comfort, and so on. The following are cited as the conventional art suppressing this vibration.

First, a method for suppressing speed fluctuation by adding speed damping by an acceleration feedback circuit has been known (refer to Japanese Patent Application Publication No. 5-58091). According to this method, vibration is suppressed by attaching a pressure sensor to the hydraulic cylinder for driving a working machine, by calculating the thrusting force of the hydraulic cylinder from the value of the pressure sensor and so on, then by calculating the acceleration compensating value by multiplying the value subjected to filter processing by the amount of feedback gain, and by conducting negative feedback of this signal to an operating lever signal. Other inventions which suppress vibration by using an accelerometer instead of a pressure sensor have been known (refer to, for example, Japanese Patent Application Laid-open No. 61-23212).

However, since the acceleration compensating value is calculated by multiplying the amount of acceleration feedback gain which is a specified fixed value, there is a disadvantage that the response to start and halt a hydraulic cylinder by an operation lever is deteriorated when a large acceleration feedback gain suitable for suppressing residual vibration is set. Accordingly, it has been necessary to set the amount of acceleration feedback gain by finding out a point of compromise between suppression of residual vibration and response.

In another conventional art which has been known, the acceleration of a working machine used in construction equipment and so on which is driven by an oil hydraulic actuator such as a hydraulic cylinder and so on is detected, then the acceleration compensating signal having a value is operated by multiplying this detected value by an output saturated type nonlinear gain, then this acceleration compensating value is compared with a lever operation command value set by an operator, then the signal having the larger value is outputted to an electromagnetic proportional pressure control valve, and thereby a directional control valve is controlled to be in a direction to reduce the residual vibration of an oil hydraulic actuator (refer to, for example, Japanese Patent Application Laid-open No. 5-163746). By the aforementioned structure, residual vibration can be suppressed with an ordinary lever operation feeling, and without deteriorating the response, and the ride comfort can be obtained.

However, in work requiring a smaller operation, for example, when a load is lifted down to a position with a specified height by a crane and so on, it is required that the width of residual vibration is reduced in a short time as well as locating the precise position, but these requirements sometimes cannot be met.

### Disclosure of the Invention

The present invention is made in order to eliminate these disadvantages of the conventional art, and an object of the present invention is to provide a device for suppressing vibration of a working machine in which the operational convenience of the lever which does not mar the responsiveness is obtained and in which residual vibration produced immediately after an operation is completed can be suppressed to be reduced over a short time.

The device for suppressing vibration of a working machine relating to the present invention is provided with an oil hydraulic actuator for driving the working machine, an oil hydraulic pump for supplying hydraulic oil to said oil hydraulic actuator, a directional control valve provided between said oil hydraulic pump and said oil hydraulic actuator, and electromagnetic proportional pressure control valves for switching and controlling said directional control valve, said device suppressing vibration of the working machine by outputting a feedback command signal having a value based on the acceleration of said working machine to said electromagnetic proportional pressure control valves, and comprising a working machine acceleration detecting means for detecting the acceleration of said working machine driven by said oil hydraulic actuator characerized by ;
a lever turning degree coefficient calculating means for calculating a coefficient corresponding to the lever turning degree from a lever operation command signal having a value by an operator;
an acceleration compensating value operating means for generating an acceleration compensating signal having a value based on an acting force calculated from said working machine acceleration and said lever turning degree coefficient;
and a feedback command means for obtaining an acceleration feedback command signal having a value based on said acceleration compensating value and said lever operation command value and for outputting said acceleration feedback command signal having a value to said electromagnetic proportional pressure control valves.

The aforementioned lever turning degree coefficient may be a coefficient which reaches its maximum at the value of the lever operation command signal when the lever is in a neutral position. In the aforementioned structure, the value of acceleration compensating signal may be the value of the acting force multiplied by the lever turning degree coefficient. Further, in the aforementioned structure, the value of the acceleration feedback command signal may be the value of the lever operation command value from which the aforementioned acceleration compensating value is subtracted. This value of the acceleration feedback command signal may be the value with the larger absolute value by comparing the lever operation command value to the acceleration compensating value.

By the aforementioned structure, in which the lever turning degree coefficient corresponds to a lever operation command by an operator and the working machine is controlled by the acceleration feedback command value considering this lever turning degree coefficient, feelings in an operation of an operator can be satisfied and vibration can be suppressed. In addition, the lever turning degree coefficient reaches its maximum when the lever is in a neutral position and the acceleration compensating value is the value of the acting force multiplied by the lever turning degree coefficient, therefore vibration after an operation is completed is excellently suppressed. It is mentioned that vibration can be excellently suppressed in either case when the acceleration feedback command value is the value of the lever operation command value from which the acceleration compensating value is subtracted, or when the acceleration feedback command value is the value having the larger absolute value, comparing the lever operation command value to the acceleration compensating value.

### Brief Description of Drawings

Fig. 1 is a general explanatory view of the device for suppressing vibration of a working machine relating to an embodiment of the present invention;
Fig. 2 is a graph showing a gain characteristic of the band-pass filter relating to an embodiment;
Fig. 3 is a graph showing the relationship between the lever turning degree and the gain relating to an embodiment;
Figs. 4 A, 4 B, and 4 C are graphs describing the change of the residual vibration immediately after the completion of the operation relating to an embodiment, and Fig. 4 A is a graph showing a lever turning degree, Fig. 4 B is a graph showing a feedback command value outputted corresponding to a lever turning degree and so on, and Fig. 4 C is a graph showing the change of a boom angle; and
Figs. 5 A and 5 B are graphs describing the change of the residual vibration immediately after the completion of the operation when the vibration is not suppressed, and Fig. 5 A is a graph showing a command value outputted corresponding to a lever turning degree and Fig. 5 B is a graph showing the change of a boom angle.

### Best Mode for Carrying out the Invention

A preferable embodiment of a device for suppressing vibration of a working machine relating to the present invention will be described in detail with reference to the attached drawings.

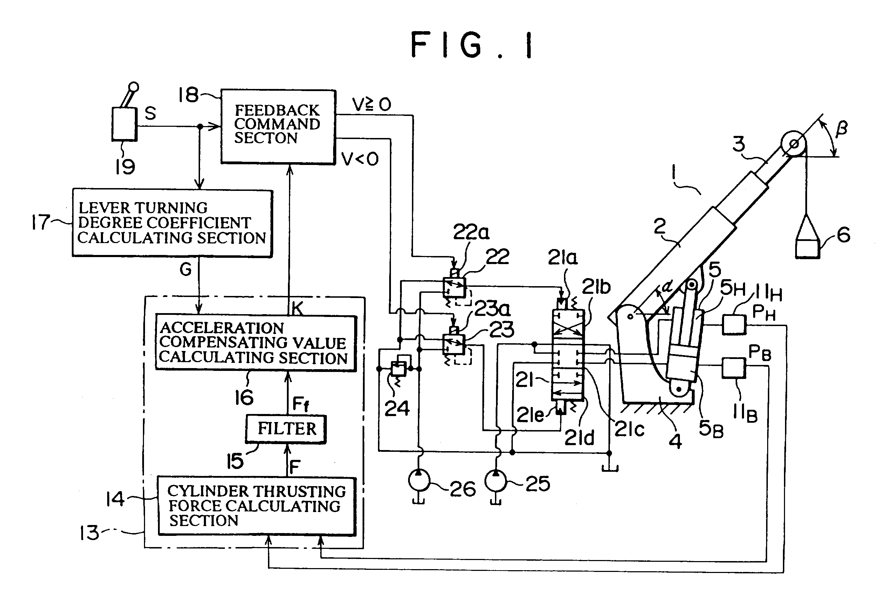

Fig. 1 is an example applied to a boom which is a working machine of a crane. The present structure is broadly defined by a boom 1, an oil hydraulic driving system for driving the boom 1, and a command control system. The boom 1 is a multistage type consisting of a base boom 2, a top boom 3 and so on. This base boom 2 is rotatively supported by a frame 4 and the operation of moving a lifted load 6 is conducted with a rope and so on provided at the foremost end of the top boom 3.

The oil hydraulic driving system consists of a boom cylinder 5 which is one example of an oil hydraulic actuator, a directional control valve 21 for selectively supplying hydraulic oil from a main oil hydraulic pump 25 to the boom cylinder 5 in accordance with a driving direction of the boom 1, electromagnetic proportional pressure control valves 22 and 23 (hereinafter referred to as EPC valves 22 and 23) for switching and controlling this directional control valve 21, a pressure regulatory valve 24 for controlling hydraulic oil from a charging pump 26 to the EPC valves 22 and 23 to have a specified pressure. The boom cylinder 5 is provided with a piston the rod of which is connected to the base of the boom 2 while an end wall of the cylinder is connected to the frame 4, so as to be rotatable and able to drive the boom 1 in an up-and-down direction. The boom cylinder is further provided with a head chamber 5H and a bottom chamber 5B.

The aforementioned EPC valves 22 and 23 includes working portions 22a and 23a connecting to a feedback command section 18 of the command control system. Theses working portions 22a and 23a send oil with pilot pressure corresponding to the command signal from the feedback command section 18 from the EPC valves 22 and 23 to the directional control valve 21. Pilot pressure driving sections 21a and 21e provided at both ends of the directional control valve 21 conduct the switching among a descending portion 21b, a holding portion 21c, and an ascending portion 21d of the directional control valve 21 by driving a spool valve (not illustrated in the drawing) and so on corresponding to a pilot pressure, and drives the boom cylinder 5 in an up-and-down direction.

The command control system is defined by pressure sensors 11H and 11B for detecting the pressure of the boom 1, a lever turning degree coefficient calculating section 17 for calculating the coefficient corresponding to the operation of a lever 19 by an operator, an acceleration compensating value operating section 13 for calculating a value based on the acceleration compensating signal, and a feedback command section 18 for outputting an acceleration feedback command signal having a value V to the EPC valves 22 and 23. The aforementioned pressure sensors 11H and 11B connects to the head chamber 5H and the bottom chamber 5B of the boom cylinder 5 and detect pressures PH and PB. The acceleration compensating value is calculated based on the pressures (the pressures PH and PB) of the boom 1 and the value of the lever turning degree coefficient calculating section 17. Further, a value based on an acceleration feedback command signal can be obtained from an acceleration compensating value and the command value by the operation of the lever 19. The acceleration compensating value operating section 13 has a cylinder thrusting force calculating section 14 and an acceleration compensating value calculating section 16, and it is preferable to provide a filter 15 such as a band-pass filter and so on between the cylinder thrusting force calculating section 14 and the acceleration compensating value calculating section 16.

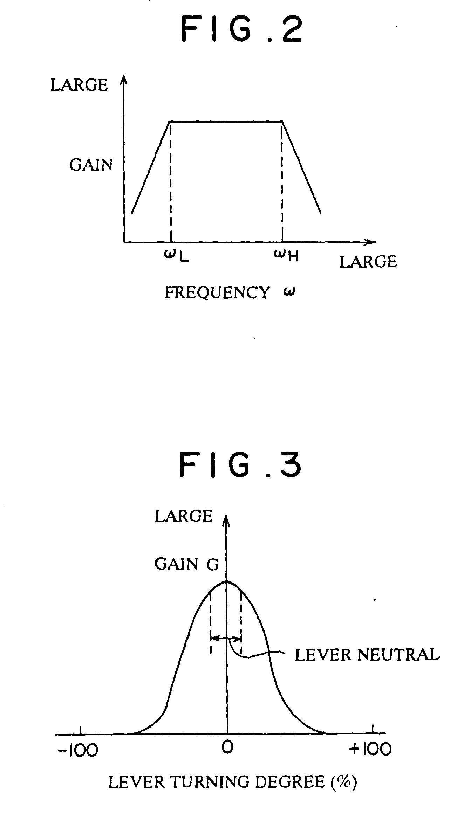

The operation in the aforementioned structure will be described. In the cylinder thrusting force calculating section 14, cylinder thrusting force F (F=PB · AB - PH · AH) is calculated from the pressures PH and PB detected in the pressure sensors 11H and 11B, and the sectional areas AH and AB of the head chamber 5H and the bottom chamber 5B of the boom cylinder 5. Since this cylinder thrusting force F includes noise and a direct-current component, it is preferable to filter them with the filter 15. The filter 15 of the present embodiment is a band-pass filter having a gain characteristic of an almost trapezoidal form as Fig. 2 illustrates. A frequency ω at a cutting point ωH is intended to cut a noise component so that the value of higher frequencies than the frequency subjected to vibration suppression may be set, and in the present embodiment the value about 30 Hz is set. For a cutting point ωL, a value which cuts the influence of the acceleration of gravity may be set, and the value is about 0.3 Hz. A cylinder thrusting force Ff which has been processed in this filter 15 is inputted to the acceleration compensating value calculating section 16.

On the other hand, a lever operation command signal having a value S by an operation of the lever 19 by an operator is inputted to the lever turning angle coefficient calculating section 17. This lever operation command value S corresponds to the lever turning degree in the operation of the lever 19, and Fig. 3 shows the relationship between a lever turning degree and gain G. The gain G which is a lever turning degree coefficient is calculated to be a function which has the maximum value (for example, G=1) when the lever is in a neutral position with a lever turning degree of about 0%, and which has a small value (for example, 0) when the lever turning degree is +100% (for example, at the full stroke position for the ascent of the boom 1) and when the lever turning degree is -100% (for example, at the full stroke position for the descent of the boom 1). This calculated gain G is inputted to the acceleration compensating value calculating section 16.

In the acceleration compensating value calculating section 16, an acceleration compensating signal having a value K (K = Ff · G) is calculated by multiplying the cylinder thrusting force Ff which went through the filter processing by the gain G and is outputted to the feedback command section18. Then the feedback command section 18 obtains an acceleration feedback command signal having the value V based on the lever operation command value S by the operation of the lever 19 and the acceleration compensating value K and outputs this acceleration feedback command signal having the value V to the EPC valves 22 and 23 as a current value. As for this output, for example, the lever operation command signal having a value S from which the acceleration compensating signal having a value K is subtracted (negative feedback) (V = S-K) is outputted as an acceleration feedback command signal having a value V. When V is less than 0 (V<0), V is outputted to the working portion 23a of the EPC valve 23, and when V is 0 or more (V ≧ 0), V is outputted to the working portion 22a of the EPC valve 22 to suppress vibration by driving the boom 1 in an up-and-down direction by the medium of the directional control valve 21 and the boom cylinder 5.

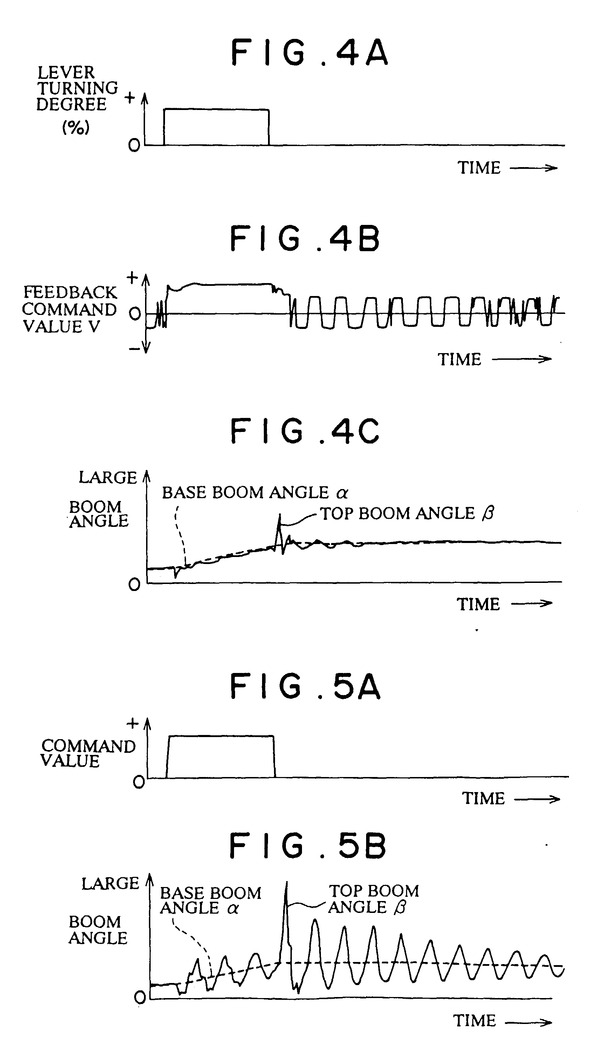

Then, regarding the change of the residual vibration immediately after the completion of each operation such as an abrupt acceleration and so on, the measurement results in the present embodiment are shown in Figs. 4 A, 4 B and 4 C, and the measurement results in which the vibration is not suppressed are shown in Figs. 5 A and 5 B. This measurement was conducted when the operation was finished by halting the boom 1 after the boom 1 ascended, and the lever turning degree 0% corresponds to the neutral position. A base boom angle α and the top boom angle β are the angles to the ground which are measured by attaching an angle sensor to the boom 1 shown in Fig. 1. As it is obvious from the graphs of the measurement results, in the present embodiment, the vibration of the top boom angle β is small by the acceleration feedback command value V even in an ascending operation. Especially by the acceleration feedback command value V immediately after the completion of an operation (the lever is in the neutral position), the vibration of the top boom is suppressed in an extremely good condition. Accordingly, the residual vibration of a suspended load and so on is reduced, and an ordinary feeling of the lever operation can be obtained while operating with an abrupt acceleration and so on, so that the response does not deteriorate. As for the acceleration feedback command signal having a value V from the feedback command section 18, even if the value with the larger absolute value is selected by comparing the lever operation command signal having a value S with the acceleration compensating signal having a value K and is outputted, the residual vibration is effectively suppressed.

As described above, in the present invention, the feedback gain corresponding to the operation lever turning degree by an operator is variable and when the lever is in a neutral position, a feedback control is conducted with a gain having a large value, so that the residual vibration immediately after the completion of an operation can be reduced over a short time. Thus, by suppressing the residual vibration immediately after the completion of the operation which is one of the vibrations operators hate most, that is residual vibration especially of 1 to 2 Hz, a good operation feeling and ride comfort can be obtained. Further, the vibration width at the foremost end of the working machine is small, so that safe workability can be obtained. When the absolute value of the lever turning degree which ascends and descends the working machine at high speed is large, the feedback gain is small, so that the effect of suppressing vibration becomes small and excellently corresponds to the conventional operation feeling of an operator. Therefore, both response to the lever operation and so on and excellent suppression of residual vibration are satisfied.

The device for suppressing vibration of a working machine relating to the present invention is described in detail in the above, however, the present invention is not limited to the embodiment. As for an oil hydraulic actuator, an oil hydraulic motor may be used, and a working machine to which the present invention is applied may be any working machine if it is driven by an oil hydraulic actuator. In the present embodiment the pressure sensor is disclosed as the working machine acceleration detecting means, however, an acceleration sensor can be used as the working machine acceleration detecting means, and by attaching this acceleration sensor to the working machine, the detected value may be inputted to the acceleration compensating value operating section to conduct the operation. Further, it is needless to say that the lever turning degree coefficient may be obtained from various functions, patterns and so on when needed.

### Industrial Availability

Accordingly, the present invention is useful as a device for suppressing residual vibration of a working machine which can obtain lever operating performance without marring the responsivity and which can suppress the residual vibration generated immediately after the completion of the operation such as, for example, an abrupt acceleration of a working machine to be reduced over a short time.

## Claims

1. A device for suppressing vibration of a working machine which is provided with an oil hydraulic actuator (5) for driving the working machine, an oil hydraulic pump (25) for supplying hydraulic oil to said oil hydraulic actuator, a directional control valve (21) provided between said oil hydraulic pump (25) and said oil hydraulic actuator (5), and electromagnetic proportional pressure control valves (22, 23) for switching and controlling said directional control valve (21), said device suppressing vibration of the working machine by outputting a feedback command signal having a value (V) based on the acceleration of said working machine to said electromagnetic proportional pressure control valves (22, 23) and comprising a working machine acceleration detecting means (13) for generating a signal representative of the acceleration of said working machine driven by said oil hydraulic actuator (5) characerized by ;
a lever turning degree coefficient calculating means (17) for calculating a coefficient (G) corresponding to the lever turning degree from a lever operation command signal value (S) set by an operator;
an acceleration compensating value operating means (16) for generating an acceleration compensating signal having a value (K) based on the value (F) of an acting force calculated from said working machine acceleration and said lever turning degree coefficient (G);
and feedback command means (18) for obtaining the acceleration feedback command signal value (V) based on said acceleration compensating signal value (K) and said lever operation command signal value (S) and for outputting said acceleration feedback command signal having a value (V) to said electromagnetic proportional pressure control valves (22, 23).

2. A device for suppressing vibration of a working machine according to Claim 1, wherein said acceleration compensating signal value (K) results from multiplication of the value (F) of said acting force by said lever turning degree coefficient (G).

3. A device for suppressing vibration of a working machine according to Claim 1, wherein said lever turning degree coefficient (G) reaches its maximum when said lever operation command signal corresponds to the lever being in a neutral position.

4. A device for suppressing vibration of a working machine according to any one of Claims 1 to 3, wherein said acceleration feedback command signal value (V) is based on said lever operation command signal value (S) from which said acceleration compensating signal value (K) is subtracted.

5. A device for for suppressing vibrations of a working machine according to any one of Claims 1 to 3, wherein said acceleration feedback command signal value (V) is obtained as the larger absolute value as a result of comparing said lever operation command signal value (S) with said acceleration compensating signal value (K).

## Patentansprüche

1. Schwingungsunterdrückungseinrichtung eines Arbeitsgeräts, die mit einem hydraulischen Stellantrieb (5) zur Betätigung des Arbeitsgeräts, einer Hydraulikpumpe (25) zur Speisung des hydraulischen Stellantriebs mit Hydrauliköl, einem zwischen der Hydraulikpumpe (25) und dem hydraulischen Stellantrieb (5) angeschlossenen Wegeventil (21) und elektromagnetischen Proportionaldrucksteuerventilen (22, 23) zum Umschalten und Ansteuern des Wegeventils (21) ausgestattet ist, wobei die Schwingungsunterdrückungseinrichtung Schwingungen des Arbeitsgeräts dadurch unterdrückt, daß sie ein von der Beschleunigung des Arbeitsgeräts abhängiges Rückkopplungsbefehlssignal mit einem Wert (V) an die elektromagnetischen Proportionaldrucksteuerventile (22, 23) abgibt und als Bestandteil eine Beschleunigungsgebereinrichtung (13) zur Bestimmung der Beschleunigung des Arbeitsgeräts und zur Erzeugung eines Signals entsprechend der Beschleunigung des mit Hilfe des hydraulischen Stellantriebs (5) betätigten Arbeitsgeräts umfaßt, gekennzeichnet durch:
eine Hebelverstellwinkelkoeffizientenrecheneinheit (17) zur Berechnung eines Koeffizienten (G) für den Hebelverstellwinkel aus einem durch einen Bediener ausgelösten Hebelverstellbefehlssignalwert (S),
eine Beschleunigungskompensationswertverarbeitungseinheit (16) zur Erzeugung eines Beschleunigungskompensationssignals mit einem Wert (K), der vom Wert (F) einer Wirkkraft abhängig ist, der aus der Beschleunigung des Arbeitsgeräts und dem Hebelverstellwinkelkoeffizienten (G) berechnet wird,
und einer Rückkopplungsbefehlseinheit (18) zur Ermittlung des vom Beschleunigungskompensationssignalwert (K) und vom Hebelverstellbefehlssignalwert (S) abhängigen Beschleunigungsrückkopplungsbefehlssignalwertes (V) und zur Abgabe des Beschleunigungsrückkopplungsbefehlssignals mit dem Wert (V) an die elektromagnetischen Proportionaldrucksteuerventile (22, 23).

2. Schwingungsunterdrückungseinrichtung eines Arbeitsgeräts nach Anspruch 1, dadurch gekennzeichnet, daß das Beschleunigungskompensationssignal mit dem Wert (K) durch Multiplizieren des Wertes (F) der Wirkkraft mit dem Hebelverstellwinkelkoeffizienten (G) gewonnen wird.

3. Schwingungsunterdrückungseinrichtung eines Arbeitsgeräts nach Anspruch 1, dadurch gekennzeichnet, daß der Hebelverstellwinkelkoeffizient (G) einen Maximalwert annimmt, wenn das Hebelverstellbefehlssignal der Nullstellung des Hebels entspricht.

4. Schwingungsunterdrückungseinrichtung eines Arbeitsgeräts nach einem der Ansprüche 1 bis 3, dadurch gekennzeichnet, daß der Beschleunigungsrückkopplungssignalwert (V) von dem Hebelverstellbefehlssignalwert (S) abhängig ist, von dem der Beschleunigungskompensationssignalwert (K) subtrahiert wird.

5. Schwingungsunterdrückungseinrichtung eines Arbeitsgeräts nach einem der Ansprüche 1 bis 3, dadurch gekennzeichnet, daß der größere absolute Wert aus dem Vergleich zwischen dem Hebelbetätigungsbefehlssignalwert (S) und dem Beschleunigungskompensationssignalwert (K) als Beschleunigungsrückkopplungsbefehlssignalwert (V) gewonnen wird.

## Revendications

1. Dispositif pour supprimer les vibrations d'une machine de travail qui est munie d'un actionneur hydraulique à huile (5) pour entraîner la machine de travail, d'une pompe hydraulique à huile (25) pour fournir de l'huile hydraulique audit actionneur hydraulique à huile, d'une valve de commande directionnelle (21) prévue entre ladite pompe hydraulique à huile (25) et ledit actionneur hydraulique à huile (5), et de valves de commande de pression proportionnelles, électromagnétiques (22,23), pour la commutation et la commande de ladite valve de commande directionnelle (21), ledit dispositif supprimant les vibrations de la machine de travail en délivrant un signal de commande à rétroaction ayant une valeur (V) basée sur l'accélération de ladite machine de travail vers lesdites valves de commande de pression proportionnelles, électromagnétiques (22, 23), et comprenant des moyens (13) de détection d'accélération de la machine de travail pour engendrer un signal représentatif de l'accélération de ladite machine de travail entraînée par ledit actionneur hydraulique à huile (5), caractérisé par :
- des moyens de calcul (17) du coefficient du degré de rotation d'un levier pour calculer un coefficient (6) correspondant au degré de rotation du levier à partir d'une valeur (S) de signal de commande de fonctionnement du levier, établie par un opérateur ;
- des moyens (16) pour établir des valeurs compensant l'accélération pour engendrer un signal de compensation d'accélération ayant une valeur (K) basée sur la valeur (F) d'une force d'actionnement calculée à partir de ladite accélération de la machine de travail et dudit coefficient (6) de degré de rotation du levier ; et
- des moyens (18) de commande à rétroaction pour obtenir la valeur (V) de signal de commande à rétroaction d'accélération, basée sur ladite valeur (K) de signal de compensation d'accélération et de ladite valeur (S) de signal de commande de fonctionnement du levier, et pour émettre ledit signal de commande à rétroaction d'accélération ayant une valeur (V) vers lesdites valves de commande de pression proportionnelles, électromagnétiques (22, 23).

2. Dispositif pour supprimer les vibrations d'une machine de travail selon la revendication 1,
dans lequel ladite valeur (K) de signal de compensation d'accélération résulte de la multiplication de la valeur (F) de ladite force d'actionnement par ledit coefficient (6) de degré de rotation du levier.

3. Dispositif pour supprimer les vibrations d'une machine de travail selon la revendication 1,
dans lequel ledit coefficient (6) de degré de rotation du levier atteint son maximum quand ledit signal de commande de fonctionnement du levier correspond au levier qui est dans une position neutre.

4. Dispositif pour supprimer les vibrations d'une machine de travail selon l'une quelconque des revendications 1 à 3,
dans lequel ladite valeur (V) de signal de commande à rétroaction d'accélération est basée sur ladite valeur (S) de signal de commande de fonctionnement du levier à partir de laquelle ladite valeur (K) de signal de compensation d'accélération est soustraite.

5. Dispositif pour supprimer les vibrations d'une machine de travail selon l'une quelconque des revendications 1 à 3,
dans lequel ladite valeur (V) du signal de commande à rétroaction d'accélération est obtenue comme la plus grande valeur absolue par suite de la comparaison de ladite valeur (S) de signal de commande de fonctionnement du levier avec ladite valeur (K) de signal de compensation d'accélération.
